## Europäisches Patentamt

## European Patent Office

## Office européen des brevets

(19)

(11) Veröffentlichungsnummer: **0 253 966**
B1

(12)

# EUROPÄISCHE PATENTSCHRIFT

(45) Veröffentlichungstag der Patentschrift:
13.12.89

(51) Int. Cl.⁴: **F16L 47/02**, B29C 65/00

(21) Anmeldenummer: 87106206.3

(22) Anmeldetag: 29.04.87

(54) Formteil aus thermoplastischem Material.

(30) Priorität: 25.06.86 CH 2562/86

(43) Veröffentlichungstag der Anmeldung:
27.01.88 Patentblatt 88/4

(45) Bekanntmachung des Hinweises auf die Patenterteilung:
13.12.89 Patentblatt 89/50

(84) Benannte Vertragsstaaten:
AT BE CH DE FR GB IT LI NL SE

(56) Entgegenhaltungen:
EP-A- 0 036 963
CH-A- 532 996
FR-A- 1 208 967
FR-A- 2 522 389

(73) Patentinhaber: GEORG FISCHER
AKTIENGESELLSCHAFT, Mühlentalstrasse 105,
CH-8201 Schaffhausen(CH)

(72) Erfinder: Steinmetz, Hans-Werner, Plattenweg 55,
CH-8200 Schaffhausen(CH)
Erfinder: Reich, Fritz, Schulstrasse 449,
CH-8448 Uhwiesen(CH)

ACTORUM AG

## Beschreibung

Die Erfindung betrifft ein Formteil aus thermoplastischem Material, wie es im Oberbegriff von Anspruch 1 gekennzeichnet ist.

Bekannt ist ein als T-Stück ausgebildetes Formteil aus thermoplastischem Material (AT-B-203 202), welches zum Verbinden mit Rohren Schweiss-Muffenteile mit elektrischen Heizvorrichtungen aufweist. Die ringförmigen Heizelemente sind in das Spritzguss-Formteil eingebettet, so dass die Herstellung des Formteiles im Spritzguss sehr aufwendig ist. Durch die Durchmessertoleranzen bei den Rohren und den Muffenteilen des Formteiles können durch fehlenden Aufbau eines Schweissdruckes ungenügende bzw. undichte Schweissungen entstehen. Ausserdem sind aufgrund des Einsteckspieles zur Halterung der Rohre und Formteile beim Schweissvorgang Vorrichtungen erforderlich, welche entsprechende Platzverhältnisse benötigen. Insbesondere bei Sanitärinstallationen, wo die Leitungen in engen Mauerschlitzen verlegt werden, sind diese Platzverhältnisse nicht gegeben.

Durch die EP-B 036 963 ist zwar eine Schweissmuffe bekannt geworden, welche durch eine eingefrorene Schrumpfspannung durch deren Auslösung beim Schweissen den für eine dichte und feste Schweissverbindung erforderlichen Schweissdruck erzeugt, doch sind hier beim Schweissvorgang Vorrichtungen für deren Fixierung erforderlich, was jedoch bei deren Verwendung für im Freien verlegte Versorgungsleitungen weniger von Nachteil ist.

Ein Fomteil der eingangs genannten Art ist durch die FR-A 2 522 389 bekanntgeworden, deren Schweissmuffenpartie eine mit umfangmässig verlaufenden bifilaren Heizwicklung versehene Heizeinrichtung und in am Aussenumfang angeordnetes Spannband aufweist, wodurch der Aufbau eines genügenden Schweissdruckes erreichbar sein soll.

Die Muffe ist durch das Spannband nur sehr begrenzt radial verformbar, so dass ein Fixieren und Festspannen des Rohres in der Muffe vor dem Schweissen nicht gewährleistet ist.

Bei der bifilaren Wicklung können durch Kurzschlüsse zwischen nebeneinanderliegenden Drähten Fehlschweissungen entstehen. Ausserdem ist eine umfangsmässig verlaufende Wicklung nicht so stark radial verformbar, wie dies für eine feste Verspannung zwischen Rohr und Muffe erforderlich ist.

Im weiteren ist durch die CH-A 532 996 ein Verfahren und eine Einrichtung zum Verschweissen zweier schalenförmiger Sattelstücke mit der Mantelfläche eines durchgehenden Kunststofrohres bekanntgeworden, wobei eines der Sattelstücke zur Verbindung mit einer Abzweigleitung einen Stutzen aufweist.

Derartige Sattelstücke entsprechen nicht einem einstückigen Formteil wie eingangs beschrieben.

Aufgabe der vorliegenden Eriindung ist die Schaffung von Formteilen der eingangs genannten Art, welche bei der Verlegung vor und während des Schweissens ohne Vorrichtungen auf engstem Raum mit den Leitungen fixiert werden können und bei welchen eine dichte und feste Schweissverbindung gewährleistet ist, so dass die Formteile für Druckleitungssysteme, wie z.B. für Kalt- und Warmwasserleitungen bei Sanitätsinstallationen verwendbar sind.

Diese Aufgabe wird durch die kennzeichnenden Merkmale von Anspruch 1 gelöst.

Besonders vorteilhafte Ausgestaltungen der Erfindung sind in den abhängigen Ansprüchen gekennzeichnet.

Durch die umfangmässig verteilte Anordnung mehrerer radialer, in axialer Richtung verlaufender Einschnitte ist die Schweiss-Muffenpartie auf eine Teillänge leicht radial verformbar, wodurch zusammen mit den durch die axial verlaufenden Windungen radial verformbaren Heizelementen mit einfachen Spann-Mitteln und geringen Kräften eine sichere Klemmung der rohrförmigen Teile erreicht wird. Dadurch können die eingesteckten und ausgerichteten, rohrförmigen Teile bereits vor dem Schweissen fixiert und gehalten werden. Der Schweissvorgang kann dann ohne zusätzliche Haltevorrichtungen zum ausgerichteten Halten der Rohre und Formteile erfolgen. Gleichzeitig wird durch die Vorspannung der Schweissmuffenpartie ein Schweissdruck erzeugt, welcher eine einwandfreie, dichte Schweissung gewährleistet.

Durch die beiden zueinander parallel geschalteten Heizelemente wird das Herausführen der Stromanschlüsse an dem äusseren Muffenende ermöglicht, ohne dass eine bifilare Wicklung erforderlich ist.

Die Erfindung ist in den beiliegenden Zeichnungen anhand von Ausführungsbeispielen dargestellt und nachfolgend beschrieben.

Es zeigen:

Fig. 1 ein als T-Stück ausgebildetes Formteil mit Schweissverbindungen teils im Schnitt,

Fig. 2 einen Schnitt entlang der Linie II–II von Fig. 1,

Fig. 3 eine Ausführungsvariante von Fig. 1,

Fig. 4 einen Schnitt entlang der Linie IV–IV von Fig. 3,

Fig. 5 eine Ansicht der Heizvorrichtung in flachgelegtem Zustand und

Fig. 6 bis 9 verschiedene Ausführungsvarianten als Teil-Querschnitte der in den Fig. 2 und 4 gezeigten Einschnitte im vergrösserten Massstab.

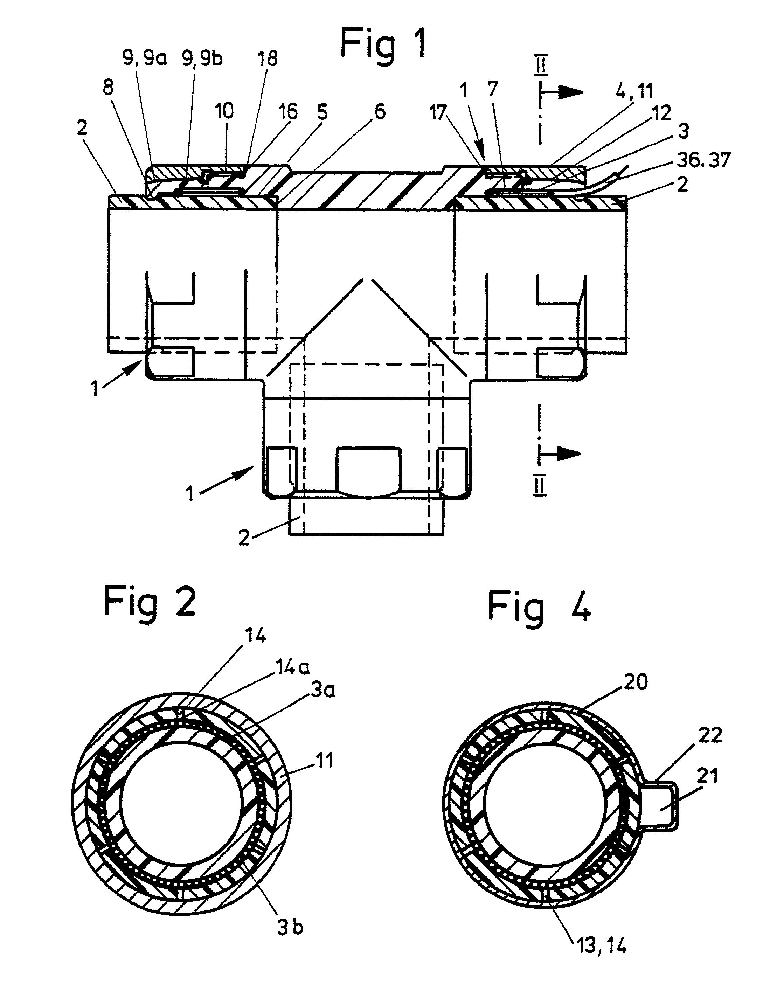

Fig. 1 und 2 zeigen ein T-Stück aus einem thermoplastischen, schweissbaren Werkstoff, welches drei Schweiss-Muffenpartien 1 zur Verbindung mit rohrförmigen Teilen 2 aufweist, welche mit je einer elektrischen Heizvorrichtung 3 und mindestens einem Spannelement 4 versehen ist. Die Innenkontur der Muffenpartie 1 weist einen Zentriersitz 5 mit einer Anschlagstirnfläche 6 für das einzusteckende Rohr 2, eine ringförmige Ausnehmung 7 für die Anordnung der Heizvorrichtung 3 sowie am äusseren Einsteckende einen Klemmwulst 8 zur Fixierung und Halterung des Rohres 2 auf.

Die Aussenkontur der Muffenpartie 1 weist einen Konus 9, vorzugsweise mit einer ersten steileren Partie 9a und einer zweiten dazu weniger steilen Partie 9b und daran anschliessend ein Aussengewinde 10 mit einer Anschlagstirnfläche 16 auf. Auf das Aussengewinde 10 ist eine Spannmutter 11 aufschraubbar, welche einen Innenkonus 12 mit zu den Partien 9a und 9b entsprechenden Konuspartien aufweist.

Die Spannmutter 11 weist an ihrer Endstirnfläche 17 eine Rasterung 18 auf, welche beim Festziehen der Mutter 11 in eine entsprechende Rasterung der Anschlagstirnfläche 16 der Schweiss-Muffenpartie 1 eingreift und so eine Verdrehsicherung der Mutter 11 bildet. Die Spannmutter 11 kann aus Metall, Kunststoff oder aus Kunststoff mit einem äusseren Metallring hergestellt sein.

Der Konus 9 weist umfangsmässig verteilt radiale in achsialer Richtung verlaufende Einschnitte 13 auf, wodurch dieser Muffenteil 1 leicht radial verspannbar ist.

Die Heizvorrichtung 3 besteht aus zwei umfangsmässig nacheinander angeordneten Heizelementen 3a, 3b, deren Heizleiter 38 zueinander parallel geschaltet sind.

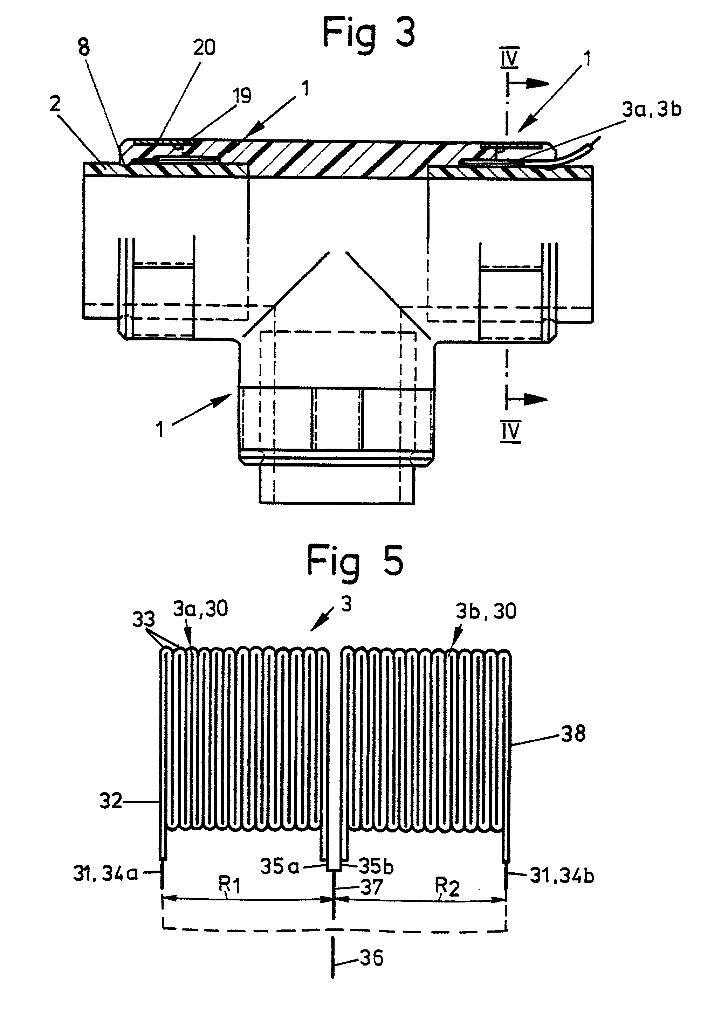

Fig. 5 zeigt die Heizvorrichtung 3 bestehend aus zwei Heizelementen 3a, 3b, welche wie aus Fig. 2 ersichtlich, umfangsmässig gegenüberliegend in die Ausnehmung 7 eingelegt werden. Jedes Heizelement 3a bzw. 3b ist als Heizmatte 30 ausgebildet, welche durch eine in Achsrichtung verlaufende zick-zack-förmige Anordnung eines Widerstanddrahtes 31 hergestellt wird. Der Widerstanddraht 31 ist mit einem thermoplastischem Kunststoff ummantelt, so dass durch diese Isolation 32 die aneinanderliegenden Windungen 33 elektrisch voneinander getrennt sind. Die Enden 34a und 34b der jeweiligen Widerstandsdrähte 31 werden zu einem Stromanschluss 36 und die Enden 35a und 35b zu einem Stromanschluss 37 zusammengefasst, so dass die beiden Widerstände R1 und R2 der Heizelemente 3a, 3b parallel geschaltet sind, wobei deren ohmscher Einzelwiderstand gleich oder nahezu gleich ist. Diese Heizelemente-Anordnung ermöglicht das Herausführen der Stromanschlüsse 36, 37 an einer Muffenseite, ohne dass eine bifilare Wicklung erforderlich ist.

Durch den in axialer Richtung windungsmässig verlaufenden und nicht ganz dicht aneinanderliegenden Heizleiter 38 ist jedes Heizelement 3a, 3b im in der Ausnehmung 7 liegenden Zustand radial verformbar, wodurch ein radiales Verspannen der gesamten Schweiss-Muffenpartie 1 mittels des Spannelementes 4 erleichtert wird.

Bei der in den Fig. 3 und 4 gezeigten Ausführungsvariante ist das Spannelement 4 als Spannbride 20 ausgebildet, welche in einer Ausdrehung 19 des zylindrisch ausgebildeten Aussenumfanges der Schweiss-Muffenpartie 1 angeordnet ist. Es können auch zwei oder mehrere Spannbriden 20 nebeneinander angeordnet werden.

Wie aus Fig. 4 ersichtlich, weist die Spannbride 20 an einem Teil ihres Umfanges eine Ausbuchtung 21 auf, an deren beiden Flanken 22 eine Zange angesetzt werden kann. Beim Betätigen der Zange werden die beiden Flanken 22 gegen einander gedrückt, wobei die Spannbride 20 zusammengeklemmt und somit die verformbare Schweiss-Muffenpartie 1 radial gegen das eingesteckte rohrförmige Teil 2 verspannbar ist. Es können auch andere Arten von Spannbriden verwendet werden, wie z.B. mittels Schrauben verspannbare Schellen oder auch sogenannte Schlauchbriden.

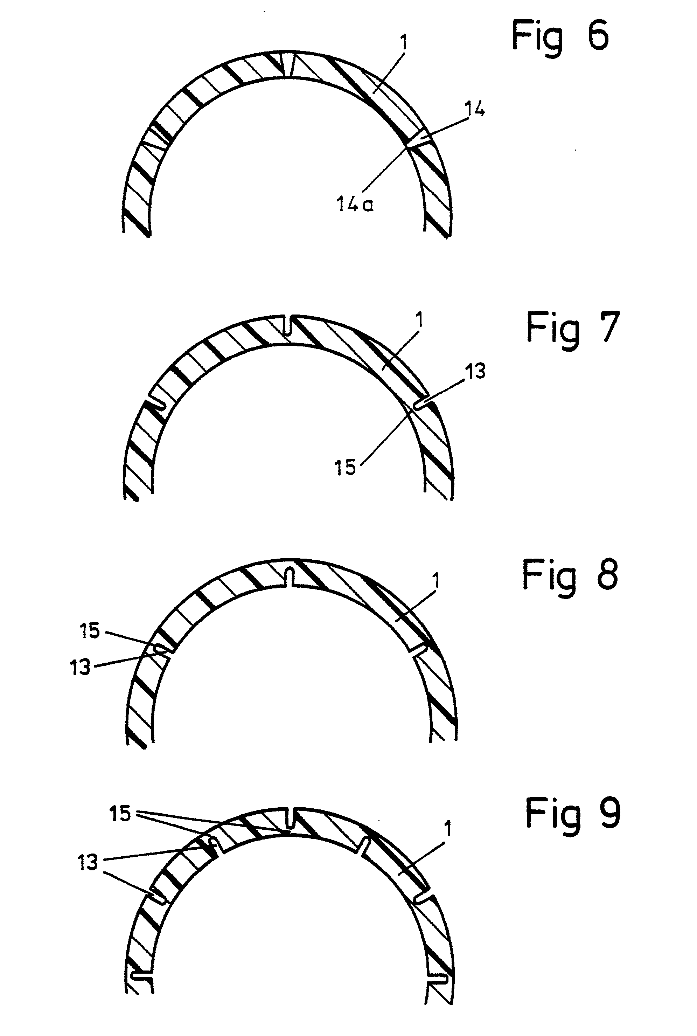

Die Einschnitte 13 an den Schweiss-Muffenpartien 1 können als Schlitze 14 ausgebildet sein, wobei sie entsprechend den Fig. 2 und 4 parallele Flanken aufweisen und entsprechend Fig. 6 konisch nach innen verkleinernd ausgebildet sind. Der Spalt 14a verengt bzw. schliesst sich beim Verspannen durch das Spannelement 4, so dass praktisch ein geschlossener Innenraum zwischen dem rohrförmigen Teil 2 und der Schweiss-Muffenpartie 1 entsteht.

Die Schlitze 14 können auch vorteilhafterweise in achsialer Richtung konisch ausgebildet sein, und zwar vom äusseren Muffenende in Längsrichtung konisch verkleinert.

Die Länge jedes Schlitzes 14 sollte mindestens bis zu der Mitte des Heizelementes 3a, 3b reichen, wobei sie über das innere Ende des Heizelementes nicht hinausragen sollte.

Wie aus den Fig. 7 und 8 ersichtlich, gehen die Einschnitte 13 entweder vom Aussenumfang oder vom Innenumfang aus und bilden einen dünnen Steg 15. Eine Kombination der Ausführungen gemäss 7 und 8 ist aus der Fig. 9 ersichtlich.

Die zum Zweck der leichten radialen Verspannung der Schweiss-Muffenpartie 1 angeordneten Einschnitte 13 bzw. Schlitze 14 ermöglichen bei allen Ausführungsvarianten im verspannten Zustand die Innenkontur nach Aussen abzuschliessen, wodurch der Innenraum bei möglichst kleinem Innenvolumen begrenzt wird. Dadurch wird ein guter Druckaufbau der Schmelze beim Schweissvorgang erreicht. Die Abdichtung nach Aussen durch den Klemmwulst 8 und nach Innen durch den Zentriersitz 5 und die Anschlagstirnfläche 6 gewährleisten ebenfalls diesen Druckaufbau und eine einwandfreie feste Schweissung.

Nach dem Einstecken der Rohre in die Formteile und Ausrichten werden diese durch Festziehen der Spannmutter (Fig. 1) oder Zusammenklemmen der Spannbride (Fig. 3) in der Schweiss-Muffenpartie des Formteiles fixiert und so festgeklemmt, dass eine Lageveränderung vor oder beim Schweissen nicht mehr möglich ist. Dabei wird durch den Klemmwulst 8 eine leichte rillenförmige Verformung des Rohres erzeugt, so dass das Rohr axial festgehalten und gegen Verdrehung gesichert ist. Durch die radiale Zusammendrückung der Schweiss-Muffenpartie 1 wird auch das radiale Spiel zwischen Muffenpartie, Heizmatten und Rohr eliminiert und eine Vorspannung in den Teilen aufgebaut.

Sind in einem Installationsbereich alle Formstücke mit den Rohren durch Klemmung verbunden, kann die Schweissung erfolgen, was durch Anschliessen der einzelnen Heizelemente an eine Stromquelle erfolgt. Alle Arbeitsgänge können, da keine Fixiervorrichtungen erforderlich sind, bei engen Platzverhältnissen durchgeführt werden, so dass ein Zusammenstecken, Fixieren und festes Verbinden durch Schweissen der Formteile mit den Rohren auch in eng begrenzten Mauerausnehmungen möglich ist.

Das Formteil kann als T-Stück, wie in den Fig. 1 und 3 dargestellt, als Winkel, Bogen oder gerade Verbindungsmuffe zum Verbinden von Rohren mit gleichen oder unterschiedlichen Durchmessern ausgebildet sein. Das für die Formteile verwendete thermoplastische Material muss schweissbar sein, wobei z.B. Polyethylen oder insbesondere für Sanitärinstallationen Polybuten geeignet ist.

## Patentansprüche

1. Formteil aus thermoplastischem Material mit mindestens einer, eine elektrische Heizvorrichtung (3) aufweisenden Schweiss-Muffenpartie (1) zur Verbindung des Formteiles mit einem rohrförmigen Teil (2), wobei die Schweissmuffenpartie (1) zum Einstecken des Endes des rohrförmigen Teiles (2) ausgebildet ist und am Aussenumfang mindestens ein Spannelement (4) zum radialen Verspannen der Muffenpartie (1) aufweist, dadurch gekennzeichnet, dass eine Teillänge der Schweiss-Muffenpartie (2) in axialer Richtung verlaufende umfangsmässig verteilt mehrere radiale Einschnitte (13, 14) aufweist und dass die Heizvorrichtung (3) aus zwei umfangsmässig gegenüberliegenden Heizelementen (3a und 3b) besteht, welche zueinander parallel geschaltet sind und deren Heizleiter (38) in axialer Richtung windungsförmig verlaufen.

2. Formteil nach Anspruch 1, dadurch gekennzeichnet, dass das Spannelement (4) aus einer auf das Formteil aufschraubbaren, einen Innenkonus (12) aufweisenden Spannmutter (11) besteht, welche mit einem an der Schweiss-Muffenpartie (1) angeordneten Aussenkonus (9) zusammenwirkt.

3. Formteil nach Anspruch 1, dadurch gekennzeichnet, dass das Spannelement (4) als eine zusammendrückbare Spannbride (20) ausgebildet ist.

4. Formteil nach einem der Ansprüche 1 bis 3, dadurch gekennzeichnet, dass die Einschnitte (13) als durch die ganze Wandstärke gehende Schlitze (14) ausgebildet sind.

5. Formteil nach einem der Ansprüche 1 bis 3, dadurch gekennzeichnet, dass die Einschnitte (13) vom Aussenumfang und/oder vom Innenumfang ausgehend jeweils einen dünnen Steg (15) am Aussen- oder Innenumfang der Schweiss-Muffenpartie (1) bilden.

6. Formteil nach einem der Ansprüche 1 bis 5, dadurch gekennzeichnet, dass am Innenumfang des äusseren Muffenendes ein Klemmwulst (8) angeordnet ist.

7. Formteil nach einem der Ansprüche 1 bis 6, dadurch gekennzeichnet, dass die Muffenpartie (1) einen Zentriersitz (5) und eine Anschlagstirnfläche (6) für das einzusteckende rohrförmige Teil (2) aufweist.

8. Formteil nach einem der Ansprüche 1 bis 7, dadurch gekennzeichnet, dass es als T-Stück, Winkel, Bogen oder gerade Muffe zum Verbinden von Rohren mit gleichen oder unterschiedlichen Durchmessern ausgebildet ist.

## Claims

1. Moulding of thermoplastic material with at least one welding sleeve part (1) having an electrical heating device (3) for connection of the moulding part with a tubular part (2), in which the welding sleeve part (1) is formed for insertion of the end of the tubular part (2) and has on its outer periphery at least one tensioning element (4) for radial tensioning of the sleeve part (1), characterised in that a portion of the length of the welding sleeve part (2) has several radial notches (13, 14) extending in the axial direction and disposed around the periphery, and that the heating device (3) comprises two oppositely lying heating elements (3a and 3b) which are connected in parallel to one another and have the heating conductors (38) which extend in the axial direction in the form of windings.

2. Moulding according to claim 1, characterised in that the tensioning element (4) comprises a tensioning nut (11) which is screw-threaded on the moulded part and has an internal conical surface (12) which co-operates with an external conical surface (9) on the welding sleeve part (1).

3. Moulding according to claim 1, characterised in that the tensioning element is formed as a constrictable tensioning band (20).

4. Moulding according to claims 1 to 3, characterised in that the notches (13) are formed as slits (14) extending through the entire wall thickness.

5. Moulding according to any of claims 1 to 3, characterised in that the notches (13) extend from the outer periphery and/or the inner periphery and each forms a thin web (15) at the outer or inner periphery of the welding sleeve part (1).

6. Moulding according to any of claims 1 to 5, characterised in that a clamping bead (a) is arranged on the inner periphery of the outer sleeve end.

7. Moulding according to any of claims 1 to 6, characterised in that the sleeve part (1) has a centering seat (5) and an abutment end surface (6) for the tubular part (2) to be inserted.

8. Moulding according to any of claims 1 to 7, characterised in that it is formed as a T-piece, a corner, a curved or a straight sleeve for connection of tubes with the same or different diameters.

## Revendications

1. Pièce moulée en matériau thermoplastique comportant au moins un manchon à souder (1) de manchon présentant un dispositif de chauffage électrique (3), destiné à la liaison de la pièce moulée avec une pièce tubulaire (2), le manchon à souder (1) étant conformée en vue de l'enfilage de l'extrémité de la pièce (2) tubulaire, et présentant à sa surface extérieure au moins un élément de serrage (4) destiné à serrer radialement le manchon (1), caractérisée en ce que le manchon à souder (2) présente sur une partie de sa longueur plusieurs entailles radiales (13, 14) réparties sur la périphérie et disposées dans le sens axial et en ce que le dispositif de chauffage (3) se compose de deux éléments chauffants (3a et 3b) situés l'un en face de l'autre sur la périphérie, branchés en parallèle l'un par rapport à l'autre et dont les conducteurs de chauffage (38) sont disposés sous forme d'enroulement dans le sens axial.

2. Pièce moulée selon la revendication 1, caractérisée en ce que l'élément de serrage (4) se comporte d'un écrou tendeur (11) susceptible d'être vissé sur la pièce moulée, présentant un cône intérieur (12), qui coopère avec un cône extérieur disposé sur le manchon à souder (1).

3. Pièce moulée selon la revendication 1, caractérisée en ce que l'élément de serrage (4) se présente sous la forme d'une bride de serrage (20) susceptible d'être resserée par compression.

4. Pièce moulée selon une des revendications 1 à 3, caractérisée en ce que les entailles (13) sont des fentes (14) traversant toute l'épaisseur de la paroi.

5. Pièce moulée selon une des revendications 1 à 3, caractérisée en ce que les entailles (13) forment en partant de la périphérie extérieure et/ou de la périphérie intérieure une partie de liaison mince (15) sur la périphérie extérieure ou sur la périphérie intérieure du manchon à souder (1).

6. Pièce moulée selon l'une des revendications 1 à 5, caractérisée en ce qu'un bourrelet de blocage (8) est disposé sur la périphérie intérieure de l'extérieur du manchon.

7. Pièce moulée selon une des revendications 1 à 6, caractérisée en ce que le machon (1) présente un siège de centrage (5) et une surface frontale de butée (6) destinées à coopérer avec la pièce tubulaire (2) qui doit être enfilée.

8. Pièce moulée selon une des revendications 1 à 7, caractérisée en ce qu'elle a une forme de T, de coude, ou de même diamètre ou de diamètres différents.

# Fig 1

# Fig 2

# Fig 4

EP 0 253 966 B1

# Fig 3

# Fig 5

Fig 6

Fig 7

Fig 8

Fig 9